# EUROPÄISCHE PATENTSCHRIFT

(11) **EP 3 261 260 B1**
(45) Veröffentlichungstag und Bekanntmachung des Hinweises auf die Patenterteilung: **08.07.2020**
(21) Anmeldenummer: 17177067.0
(22) Anmeldetag: 21.06.2017
(51) Int. Cl.: H04B 3/54

(54) **ELEKTRISCHES HAUSHALTSGERÄT MIT EINER DATENÜBERTRAGUNGSEINRICHTUNG UND VORRICHTUNG ZUM EMPFANGEN VON DATEN VON EINEM SOLCHEN GERÄT**
ELECTRIC HOUSEHOLD APPLIANCE WITH A DATA TRANSMISSION DEVICE AND DEVICE FOR RECEIVING DATA FROM SUCH A DEVICE
APPAREIL MÉNAGER ÉLECTRIQUE COMPRENANT UN DISPOSITIF DE TRANSMISSION DE DONNÉES ET DISPOSITIF DE RÉCEPTION DE DONNÉES PROVENANT D'UN TEL DISPOSITIF

(30) Priorität: 21.06.2016 DE 102016111351
(43) Veröffentlichungstag der Anmeldung: 27.12.2017
(73) Patentinhaber: EMH metering GmbH & Co. KG, 19258 Gallin (DE)
(72) Erfinder: Lübeck, Felix, 21614 Buxtehude (DE)
(74) Vertreter: Hauck Patentanwaltspartnerschaft mbB

(56) Entgegenhaltungen:
- EP-A1- 0 727 668
- EP-A2- 2 675 034
- WO-A1-02/05449
- WO-A1-2006/034866
- US-A1- 2004 037 221
- US-B1- 6 218 931
- US-B2- 9 031 116

## Beschreibung

Die Erfindung betrifft eine Übertragung von Daten über ein elektrisches Versorgungsnetz. Zu diesem Zweck lange bekannt ist die sogenannte *Powerline Communication* (PLC)-Technologie, bei der hochfrequente Spannungssignale in die Versorgungsleitung eingekoppelt und von einem parallel angeschlossenen Empfangsgerät empfangen werden.

Aus der Druckschrift US 2004/0037221 A1 ist ein Verfahren für eine Datenübertragung von einem Haushaltsgerät HA zu einem Überwachungsgerät SA bekannt, das auf einem anderen Prinzip beruht. Dabei wird die von dem Haushaltsgerät aufgenommene elektrische Leistung moduliert. Einzelne Bits werden durch kurzzeitiges Zuschalten eines Verbrauchers mit einem Triac zu unterschiedlichen Zeiten mit Bezug auf die Halbwellen der Versorgungsspannung codiert. Für diese Codierung benötigt das Haushaltsgerät eine Einrichtung zum Erfassen des Nulldurchgangs der Versorgungsspannung. Bei dem bekannten Verfahren ist eine bidirektionale Kommunikation zwischen einander paarweise fest zugeordneten Haushaltsgeräten und Überwachungsgeräten vorgesehen und die Haushaltsgeräte weisen Empfangseinrichtungen auf. Beispielsweise wird von einem Haushaltsgerät erst dann ein Signal gesendet, wenn es von dem zugeordneten Überwachungsgerät ein Startsignal empfangen hat. Um Daten von mehreren Haushaltsgeräten empfangen zu können, muss eine entsprechende Anzahl von Überwachungsgeräten vorgehalten werden.

Aus der Druckschrift EP 2 675 034 A2 ist ein Verfahren zur Verbrauchsmessung mehrerer elektrischer Verbraucher mit einer Messeinrichtung bekannt geworden. Um die Verbräuche mehrerer an die Messeinrichtung angeschlossener Verbraucher voneinander unterscheiden zu können, soll jeder Verbraucher seine elektrische Leistung entsprechend einem vorgegebenen Muster steuern, das von der Messeinrichtung ausgewertet wird. Eine Übertragung von Daten ist nicht vorgesehen.

Aus der Druckschrift US 6,218,931 B1 ist ein Verfahren bekannt, bei dem eine Vielzahl unterschiedlicher Haushaltsgeräte an ein Stromnetz angeschlossen sind und über spezielle Schnittstellen miteinander kommunizieren. Dabei verwenden die Haushaltsgeräte Sendeeinrichtungen, die ein digitales Nutzsignal mittels Phasenumtastung umwandeln und mit einer RF-Trägerfrequenz mischen. Das dabei entstehende, zu übertragende RF-Nutzsignal wird mit einem Spreizcode multipliziert und als breitbandiges Signal über das Stromnetz übertragen. Eine Modulation der Leistung der elektrischen Haushaltsgeräte ist nicht vorgesehen.

Aus der Druckschrift WO 02/05449 A1 ist eine Vorrichtung mit den Merkmalen des Oberbegriffs des Anspruchs 1 bekannt geworden.

Davon ausgehend ist es die Aufgabe der Erfindung, ein elektrisches Haushaltsgerät mit einer Datenübertragungseinrichtung sowie eine Vorrichtung zum Empfang von Daten von einem solchen Haushaltsgerät zur Verfügung zu stellen, die eine einfache und kostengünstige Übertragung von Daten von dem Haushaltsgerät zu der Vorrichtung zum Empfang von Daten ermöglichen.

Diese Aufgabe wird gelöst durch das elektrische Haushaltsgerät mit den Merkmalen des Anspruchs 1. Vorteilhafte Ausgestaltungen sind in den sich anschließenden Unteransprüchen angegeben.

Das elektrische Haushaltsgerät hat eine Datenübertragungseinrichtung, die eine Steuerung zum Modulieren einer elektrischen Leistung des Haushaltsgeräts aufweist, wobei die Steuerung dazu eingerichtet ist, ein Nutzsignal in einem *Direct Sequence* CDMA-Verfahren mit einer vorgegebenen Codefolge zu codieren und die elektrische Leistung mit dem codierten Signal zu modulieren. Die Codefolge kann insbesondere eine bipolare Folge sein. Das Nutzsignal kann insbesondere ein bipolares Signal sein.

Das elektrische Haushaltsgerät ist ein beliebiges, in einem Haushalt verwendbares Gerät, das zum Anschluss an ein elektrisches Versorgungsnetz bestimmt ist. Beispielsweise kann es sich um eine Waschmaschine, einen Geschirrspüler, einen Kühl- oder Gefrierschrank, einen Computer, einen Fernseher, eine Werkzeugmaschine oder eine Beleuchtungseinrichtung handeln. Das elektrische Haushaltsgerät kann insbesondere eine Anschlussleitung mit einem Stecker aufweisen, der in eine haushaltsübliche Steckdose passt. Das elektrische Versorgungsnetz kann insbesondere eine Wechselspannung zur Verfügung stellen und hierzu eine Phase und einen Nullleiter aufweisen.

Das Haushaltsgerät weist eine Steuerung zum Modulieren einer elektrischen Leistung des Haushaltsgeräts auf. Mit anderen Worten kann die von dem Haushaltsgerät aufgenommene oder abgegebene elektrische Leistung von der Steuerung in ihrem zeitlichen Verlauf beeinflusst werden. Diese Modulation der elektrischen Leistung schließt eine gezielte Beeinflussung der Wirk- und/oder Blindleistung des Haushaltsgeräts ein. Insbesondere kann die Wirk- und/oder Blindleistung durch die Modulation zwischen zwei vorgegebenen Werten schwanken.

Die Datenübertragungseinrichtung dient zur Übertragung eines Nutzsignals, das unterschiedliche Informationen enthalten kann. Insbesondere kann das Nutzsignal bei wechselnder Informationslage unterschiedliche Werte annehmen. Das Nutzsignal kann von dem elektrischen Haushaltsgerät selbst erzeugt werden, beispielsweise auf Grundlage wechselnder Betriebszustände des Haushaltsgeräts. Das Nutzsignal kann mindestens eine Information enthalten, die über eine zeitlich unveränderte Kennung des Haushaltsgeräts hinausgeht.

Bei der Erfindung wird das Nutzsignal in einem *Direct Sequence* CDMA-Verfahren mit einer vorgegebenen Codefolge codiert. CDMA steht für *Code Division Multiple Access* und bezeichnet ein Bandspreizverfahren, bei dem das Nutzsignal mit einem Spreizcode, der aus einer Folge von Chips besteht, multipliziert wird. Dadurch wird das Nutzsignal im Frequenzbereich aufgeweitet. Die Verknüpfung (insbesondere Multiplikation) des Nutzsignals mit dem Spreizcode, der auch als Codefolge bezeichnet wird, führt zu einem codierten Signal. Mit diesem codierten Signal wird die elektrische Leistung moduliert. Empfängerseitig kann die elektrische Leistung gemessen und durch Demodulation kann das codierte Signal zurückgewonnen werden. Sofern die Codefolge auf Seiten des Empfängers bekannt ist, kann durch entsprechende Decodierung das Nutzsignal zurückgewonnen werden.

Bei einem *Direct Sequence* CDMA-Verfahren weist das Nutzsignal einen Bittakt T und die Codefolge eine Anzahl von Chipintervallen einer Dauer T_{C} auf, wobei der Bittakt T ein ganzzahliges Vielfaches der Dauer der Chipintervalle T_{C} ist. Diese Form der Codierung ist besonders einfach.

Die erfindungsgemäß vorgesehene Modulation der elektrischen Leistung mit dem codierten Signal kann insbesondere mit Hilfe einer Schalteinrichtung bewerkstelligt werden, die einen elektrischen Verbraucher des elektrischen Haushaltsgeräts ein- und abschaltet. Dadurch schwankt die insgesamt von dem elektrischen Haushaltsgerät aufgenommene (oder abgegebene) Leistung entsprechend dem Schaltzustand. Der geschaltete elektrische Verbraucher kann der einzige elektrische Verbraucher des Haushaltsgeräts sein oder nur einer von vielen elektrischen Verbrauchern des Haushaltsgeräts. Dementsprechend kann das Schalten des elektrischen Verbrauchers zu einer mehr oder weniger ausgeprägten Schwankung der elektrischen Leistung des Haushaltsgeräts führen, zum Beispiel zu einer Schwankung von 100 % einer Gesamtleistung des Haushaltsgeräts oder zur einer Schwankung im Bereich von 50 % oder weniger oder nur 10 % oder weniger der Gesamtleistung.

Der besondere Vorteil der erfindungsgemäßen Codierung und Modulation des Nutzsignals besteht darin, dass mehrere elektrische Haushaltsgeräte, die an dasselbe Versorgungsnetz angeschlossen sind, gleichzeitig Daten übertragen können. Grund hierfür ist, dass empfängerseitig bei Verwendung geeigneter, unterschiedlicher Codefolgen auch überlappende Signale ausgewertet werden können.

Die Datenübertragung eines Nutzsignals kann bei der Erfindung zu beliebigen Zeiten erfolgen, insbesondere ausgelöst durch bestimmte, das elektrische Haushaltsgerät betreffende Ereignisse wie Ein- oder Ausschaltvorgänge. Dies wird weiter unten noch erläutert. Ebenfalls möglich ist eine ereignisunabhängige Datenübertragung, beispielweise zu vorgegebenen oder zufälligen Zeitpunkten und/oder fortlaufend in regelmäßigen oder zufälligen zeitlichen Abständen.

In einer Ausgestaltung ist das *Direct Sequence* CDMA-Verfahren ein asynchrones *Direct Sequence* CDMA-Verfahren. Bei einem solchen asynchronen Verfahren können mehrere elektrische Haushaltsgeräte codierte Signale zu beliebigen Zeitpunkten aussenden. Es ist keinerlei Koordination zwischen unterschiedlichen Sendern erforderlich. Die Steuerungen der elektrischen Haushaltsgeräte benötigen daher keinerlei Empfangseinrichtung, die für eine Synchronisation genutzt werden könnte, noch Mittel zur Erfassung eines Nulldurchgangs der Versorgungsspannung, da auch mit Bezug auf diese Nulldurchgänge keinerlei Synchronisation erforderlich ist. Insbesondere können sich die elektrischen Haushaltsgeräte dadurch auszeichnen, dass sie keinerlei Empfangseinrichtung und/oder keinerlei Mittel zur Erfassung eines Nulldurchgangs einer Versorgungsspannung aufweisen.

In einer Ausgestaltung ist die Codefolge eine Gold-Folge. Gold-Folgen bilden eine Familie, die zwei bipolare, periodische m-Folgen gleicher Länge M sowie alle möglichen Produktfolgen, die daraus gebildet werden können, enthalten. Gold-Folgen sind im Zusammenhang mit CDMA-Verfahren bekannt und zeichnen sich dadurch aus, dass sie näherungsweise orthogonal zueinander sind. Mit unterschiedlichen Gold-Folgen codierte Nutzsignale können daher stets auf Seiten eines Empfängers auseinandergehalten werden. Die vorstehend beschriebenen Gold-Folgen sind insbesondere geeignet für asynchrone *Direct Sequence* CDMA-Verfahren, da die näherungsweise Orthogonalität dieser Folgen unabhängig von einer Synchronisation gegeben ist.

In einer Ausgestaltung ist das elektrische Haushaltsgerät zum Anschließen an ein elektrisches Versorgungsnetz bestimmt, das eine vorgegebene Netzfrequenz aufweist, wobei die Länge der Chipintervalle der Codefolge einer Periodendauer der Netzfrequenz entspricht oder einem ganzzahligen Vielfachen davon. Durch diese Maßnahme erstreckt sich jedes Chipintervall über eine oder mehrere volle Perioden der Netzfrequenz. Die Modulation der elektrischen Leistung bleibt daher von Phasenverschiebungen zwischen dem codierten Signal und der Versorgungsspannung im Wesentlichen unbeeinflusst.

In einer Ausgestaltung beträgt die Länge der Chipintervalle 100 ms oder ein ganzzahliges Vielfaches davon. Durch diese spezielle Wahl wird die vorgenannte Bedingung für die Länge der Chipintervalle bei den gängigen Netzfrequenzen von 50 Hertz und 60 Hertz gleichermaßen erfüllt. Entsprechend ausgestattete Haushaltsgeräte können daher ohne weitere Anpassungen bei beiden Netzfrequenzen betrieben werden.

In einer Ausgestaltung weist das elektrische Haushaltsgerät eine Hauptfunktion auf und einen elektrischen Verbraucher, der zum Bereitstellen der Hauptfunktion mit elektrischer Leistung zu versorgen ist, wobei die Steuerung die elektrische Leistung des elektrischen Verbrauchers so moduliert, dass die Hauptfunktion im Wesentlichen ohne Beeinträchtigung bereitgestellt wird. Die Hauptfunktion richtet sich nach dem Typ des Haushaltsgeräts. Sie kann auch als "eigentliche Funktion" des Haushaltsgeräts bezeichnet werden. Beispielsweise ist die Hauptfunktion eines erfindungsgemäß ausgestatteten Fernsehers, Bild und Ton eines Fernsehprogramms anzuzeigen, diejenige eines Wasserkochers, Wasser zu erhitzen, usw. Die Steuerung berücksichtigt die jeweilige Hauptfunktion bei der Modulation der elektrischen Leistung des Haushaltsgeräts und sorgt dafür, dass die Hauptfunktion nicht oder fast nicht beeinträchtigt wird. Bei wenig zeitkritischen Hauptfunktionen wie etwa dem Erhitzen von Wasser mit einem Wasserkocher kann dies bedeuten, dass die Absenkung der Leistung bei der Modulation in Dauer und Ausmaß so gering gehalten wird, dass das Erhitzen des Wassers in gewohnter Weise erfolgt. Ebenfalls möglich ist eine Modulation, die Leistungseinbußen während einer Absenkung der Leistung durch einen Betrieb mit erhöhter Leistung vor und/oder nach jeder Absenkung kompensiert. Beispielsweise kann ein Wasserkocher mit einer Nennleistung von 2000 W im Dauerbetrieb während der Modulation mit abwechselnd 2100 W und 1900 W betrieben werden.

Auch die Leistungsaufnahme komplizierterer Hauptfunktionen kann entsprechend der genannten Ausgestaltung moduliert werden, insbesondere indem Schritte, die mit einer Aufnahme elektrischen Leistung verbunden sind, verlangsamt und/oder beschleunigt ausgeführt werden. Dies wird am Beispiel eines Fernsehers erläutert, der eine Recheneinheit zur Dekompression digitaler Bilddaten aufweist: Die Recheneinheit kann einen Energiesparmodus aufweisen, in dem sie keine Berechnungen ausführt und nur eine minimale elektrische Leistung aufnimmt, und einen Leistungsmodus, in dem sie Bilddaten mit doppelter Geschwindigkeit dekomprimiert und eine erhöhte elektrische Leistung benötigt. Für eine Modulation der elektrischen Leistung des Fernsehers kann die Steuerung die Recheneinheit abwechselnd im Energiespar- und im Leistungsmodus betreiben, wobei im Leistungsmodus "auf Vorrat" dekomprimierte Bilddaten in einem Speicher gepuffert und während des Energiesparmodus auf dem Bildschirm angezeigt werden. Auf diese Weise kann auch bei grundsätzlich zeitkritischen Abläufen wie der Wiedergabe eines Fernsehbilds eine Modulation der elektrischen Leistung erzielt werden, die die Hauptfunktion des Fernsehers nur unwesentlich beeinträchtigt.

Für den Fall, dass die Modulation der elektrischen Leistung dennoch zu einer Beeinflussung der Hauptfunktion führt, die ein Benutzer als störend empfindet - am Beispiel des Fernsehgeräts könnte dies beispielsweise die durch die Pufferung der Bilddaten entstehende Verzögerung gegenüber einer sofortigen Wiedergabe der dekomprimierten Bilddaten sein, die zum Beispiel bei der Live-Übertragung eines Fußballspiels relevant sein könnte - kann das elektrische Haushaltsgerät eine Einstellmöglichkeit aufweisen, mit der die Modulation der elektrischen Leistung und damit die Möglichkeit zur Datenübertragung vollständig deaktiviert werden kann.

In einer Ausgestaltung weist das elektrische Haushaltsgerät einen Blindverbraucher auf und die Steuerung ist dazu ausgebildet, den Blindverbraucher ein- und auszuschalten, sodass die Modulation der elektrischen Leistung in einer Modulation der elektrischen Blindleistung des Haushaltsgeräts besteht. Der Blindverbraucher kann beispielsweise ein Kondensator sein. Er kann ausschließlich zum Zweck der Datenaussendung eingesetzt werden. Für das Ein- und Ausschalten des Blindverbrauchers kann ein geeignetes Halbleiterbauelement verwendet werden, beispielsweise ein Triac. Der besondere Vorteil der Verwendung eines Blindverbrauchers besteht darin, dass für die Datenübertragung keine Wirkleistung übertragen werden muss. Es ist auch nicht erforderlich, die von dem elektrischen Haushaltsgerät aufgenommene oder abgegebene elektrische Wirkleistung für die Datenübertragung zu beeinflussen. Das elektrische Haushaltsgerät kann daher seine unabhängig von der Datenübertragung bestehende Funktion auch dann erfüllen, wenn dies spezielle Anforderungen an eine kontinuierliche Wirkleistungsversorgung stellt.

Bei der Erfindung ist die Steuerung dazu ausgebildet, einen Einschaltvorgang des elektrischen Verbrauchers zu erfassen und ein Nutzsignal auszusenden, das eine Information über den Einschaltvorgang enthält. Die Information über den Einschaltvorgang kann beispielsweise in einem einzelnen Bit des Nutzsignals, nachfolgend bezeichnet als Flankenbit, codiert sein. Ist das Flankenbit gesetzt, bedeutet dies, dass ein Einschaltvorgang erfasst wurde, der elektrische Verbraucher also beispielsweise kurz vor Aussendung des Nutzsignals eingeschaltet worden ist. Dadurch kann auf Seiten des Empfängers festgestellt werden, dass der elektrische Verbraucher eingeschaltet worden ist. Diese Information bietet eine Grundlage für eine Zuordnung der empfängerseitig gemessenen, elektrischen Leistungen zu dem elektrischen Haushaltsgerät, das das Nutzsignal ausgesendet hat. Mit dem Begriff "Einschaltvorgang" wird dabei jegliche Inbetriebnahme eines Verbrauchers oder aller Verbraucher des elektrischen Haushaltsgeräts bezeichnet. Einbezogen sind insbesondere zeitgesteuerte Einschaltvorgänge - etwa die Einschaltung einer Beleuchtungseinrichtung zu einer programmierten Uhrzeit - und automatisch erfolgende Einschaltvorgänge, beispielsweise durch ein Thermostat, das bei einer Gefriertruhe das Überschreiten einer vorgegebenen Mindesttemperatur feststellt und nachfolgend einen Kühlmechanismus aktiviert. Ebenfalls einbezogen sind Einschaltvorgänge, die auf einer Benutzerinteraktion beruhen, beispielsweise bei einem Herd, der von einem Benutzer per Knopfdruck eingeschaltet wird.

Bei der Erfindung ist die Steuerung dazu ausgebildet, das Nutzsignal mit der Information über den Einschaltvorgang in einem vorgegebenen zeitlichen Abstand nach dem Einschaltvorgang auszusenden. Der vorgegebene zeitliche Abstand kann für das jeweilige elektrische Haushaltsgerät fest vorgegeben und empfängerseitig bekannt sein. Ebenfalls möglich ist die Verwendung eines fest vorgegebenen zeitlichen Abstands, der empfängerseitig nicht bekannt ist. Die Verwendung eines vorgegebenen zeitlichen Abstands ermöglicht empfängerseitig eine genauere Auswertung der dem elektrischen Haushaltsgerät zugeordneten elektrischen Leistung, weil bei Auswertung des Nutzsignals auf Seiten des Empfängers ein zuvor in dem vorgegebenen zeitlichen Abstand gemessener Anstieg der elektrischen Leistung einfach dem elektrischen Haushaltsgerät zugeordnet werden kann.

In einer Ausgestaltung ist die Steuerung dazu ausgebildet, eine Interaktion eines Benutzers mit dem elektrischen Haushaltsgerät zu erfassen und ein Nutzsignal auszusenden, das eine Information über die Benutzerinteraktion enthält. Beispielsweise kann das Nutzsignal ein Bit enthalten, in dem die Information über die Benutzerinteraktion codiert ist. Dieses Bit wird nachfolgend auch als Aktivitätsbit bezeichnet. Die Benutzerinteraktion kann in jeglicher Einflussnahme des Benutzers auf das elektrische Haushaltsgerät bestehen, beispielsweise in einem manuellen Einschalten einer Beleuchtungseinrichtung, in einem Wechsel eines Fernsehkanals, in der Auswahl eines bestimmten Programms eines Geschirrspülers oder im Anschließen eines Mobiltelefons an ein Ladegerät. Durch das Aussenden eines Nutzsignals, das die Information über eine Benutzerinteraktion enthält, kann empfängerseitig festgestellt werden, ob der Benutzer eine bestimmte Aktivität zeigt. Eine Überwachung dieser Aktivität kann insbesondere sinnvoll sein bei alleinlebenden, hilfs- oder pflegebedürftigen Personen, bei denen fehlende Aktivität auf einen medizinischen Notfall hindeuten kann. Bekannte Systeme zur Erkennung solcher Notfälle auf Grundlage von Daten zum elektrischen Verbrauch sind vergleichsweise unzuverlässig, da die elektrische Leistung eines Haushalts unabhängig von einer Benutzerinteraktion ständig schwankt, beispielsweise wenn eine Heizung oder ein Kühlgerät thermostatgesteuert ein- oder ausgeschaltet wird. Die explizite Übertragung einer Information über eine Benutzerinteraktion liefert eine zuverlässige Auskunft über die Aktivität eines Benutzers.

Weitere Informationen, die in dem Nutzsignal enthalten sein können, beispielsweise jeweils in Form eines speziellen Bits, können einen Konfigurations-, Auffüll- oder Wartungsbedarf, eine Gefahrensituation oder einen Ausschaltvorgang des elektrischen Haushaltsgeräts anzeigen. Ebenfalls in dem Nutzsignal enthalten sein kann ein sogenanntes Togglebit, das bei aufeinander folgenden Datenübertragungen des elektrischen Haushaltsgeräts abwechselnd gesetzt und nicht gesetzt ist. Ein solches Togglebit bietet die Möglichkeit, empfängerseitig zu erkennen, ob ein lückenloser Empfang gegeben ist.

In einer Ausgestaltung weist das elektrische Haushaltsgerät Mittel zur Erfassung der Anwesenheit einer Person auf und die Steuerung ist dazu ausgebildet, ein Nutzsignal auszusenden, das eine Information über die Anwesenheit enthält. Die Information über die Anwesenheit kann in einem speziellen Bit des Nutzsignals codiert sein, nachfolgend bezeichnet als Anwesenheitsbit. Dieses Vorgehen ist insbesondere im Zusammenhang mit hilfs- oder pflegebedürftigen Bewohnern eines Haushalts sinnvoll, um die Anwesenheit eines Betreuers oder Pflegers anzuzeigen. Die Anwesenheit der Person kann dabei auf unterschiedliche Weise von dem elektrischen Haushaltsgerät erfasst werden. Im einfachsten Fall kann das Haushaltsgerät hierzu einen speziellen Schalter oder Taster aufweisen, der von der Person beispielsweise beim Betreten des Haushalts betätigt wird. Ebenfalls möglich ist die Verwendung eines Schlüsselschalters. Die Mittel zur Erfassung der Anwesenheit der Person können auch drahtlos arbeiten, beispielsweise unter Verwendung eines RFID-Tags, den die Person mitführt. Eine weitere Möglichkeit zur Erfassung der Anwesenheit einer Person besteht in einem Erkennen eines von der Person mitgeführten Mobiltelefons, das sich in einem WLAN des Haushalts anmeldet. In diesem Fall kann die Anwesenheit der Person vollautomatisch erfasst werden. Ein hierfür geeignetes elektrisches Haushaltsgerät ist beispielsweise ein WLAN-Router, in den eine entsprechende Funktionalität integriert werden kann.

In einer Ausgestaltung weist das elektrische Haushaltsgerät ein Netzteil auf, wobei die Steuerung am Ausgang des Netzteils angeordnet und dazu ausgebildet ist, die elektrische Leistung eines mit dem Ausgang des Netzteils verbundenen elektrischen Verbrauchers zu modulieren. Bei dem Netzteil kann es sich um ein in das elektrische Haushaltsgerät integriertes Netzteil, insbesondere jedoch um ein Steckernetzteil handeln, das mit einer Niederspannungsleitung mit dem Haushaltsgerät verbunden wird. Bemerkenswert an dieser Lösung ist, dass die Modulation der elektrischen Leistung vollständig auf die Sekundärseite des Netzteils beschränkt ist, jedoch mit einer entsprechenden Modulation der elektrischen Leistung an der Primärseite einhergeht. Dies ist ausreichend, um empfängerseitig die modulierte Leistung messen zu können.

Die oben genannte Aufgabe wird ebenfalls gelöst durch eine Vorrichtung zum Empfang von Daten mit den Merkmalen des Anspruchs 11. Vorteilhafte Ausgestaltungen sind in den sich anschließenden Unteransprüchen angegeben.

Die Vorrichtung dient zum Empfang von Daten von einem elektrischen Haushaltsgerät nach einem der Ansprüche 1 bis 10, wobei die Vorrichtung eine Messeinrichtung, die dazu ausgebildet ist, einen elektrischen Strom des elektrischen Verbrauchers zu messen, und eine Empfangseinrichtung aufweist, die dazu ausgebildet ist, den von der Messeinrichtung gemessenen elektrischen Strom in einem Direct Sequence CDMA-Verfahren mit einer vorgegebenen Codefolge zu demodulieren und das von dem elektrischen Haushaltsgerät übertragene Nutzsignal zu decodieren und zur weiteren Auswertung zur Verfügung zu stellen.

Zur Erläuterung der Merkmale und Vorteile der Vorrichtung zum Empfang von Daten wird zunächst auf die vorstehenden Ausführungen verwiesen, die entsprechend gelten. Die Vorrichtung stellt das von dem elektrischen Haushaltsgerät übertragene Nutzsignal zur weiteren Auswertung zur Verfügung. Dies gelingt beispielsweise über eine elektronische Schnittstelle oder über eine Anzeige, die das Nutzsignal bzw. die darin enthaltenen Informationen anzeigt.

In einer Ausgestaltung weist die Vorrichtung eine Kommunikationseinrichtung zum Übertragen von empfangenen Nutzsignalen auf. Über die Kommunikationseinrichtung können die übertragenen Daten beispielsweise an einen Internetserver übertragen werden, auf den ein Bewohner des Haushalts zugreifen kann, um detaillierte Informationen über den Verbrauch elektrischer Energie in seinem Haushalt zu erhalten. Ebenfalls möglich ist eine automatisierte Benachrichtigung einer Person über ein Netzwerk, beispielsweise falls über einen längeren Zeitraum hinweg keine Benutzerinteraktion festgestellt wurde und ein medizinischer Notfall vorliegen könnte.

Bei der Erfindung ist die Vorrichtung in einen Elektrizitätszähler integriert, wobei die Messeinrichtung Teil eines Messwerks des Elektrizitätszählers ist. Grundsätzlich kann die Vorrichtung zum Empfang von Daten auch in andere Geräte integriert sein, mit denen ein Stromverbrauch in dem Versorgungsnetz des betreffenden Haushalts gemessen werden kann. Möglich wäre beispielsweise ein Messwertgeber mit einem Stromwandler, der zur Überwachung des Stromverbrauchs unabhängig von einem Elektrizitätszähler eingesetzt werden kann, aber auch eine Integration in einen digitalen Fehlerstromschutzschalter. Die Verwendung eines Elektrizitätszählers, der vorwiegend zu Abrechnungszwecken eingesetzt wird, ist besonders sinnvoll, weil herkömmliche elektronische Elektrizitätszähler über eine präzise Messeinrichtung und ausreichende Rechenleistung verfügen, um die übertragenen Daten empfangen und ggf. auswerten zu können.

Die oben genannte Aufgabe wird ebenfalls gelöst durch ein System mit einer Vielzahl von elektrischen Haushaltsgeräten nach einem der Ansprüche 1 bis 10 und einer Vorrichtung zum Empfang von Daten nach Anspruch 11 oder 12, wobei in der Empfangseinrichtung der Vorrichtung zum Empfang von Daten eine Vielzahl unterschiedlicher Codefolgen hinterlegt sind, die jeweils einer Geräteklasse zugeordnet sind, und jedes der elektrischen Haushaltsgeräte einer definierten Geräteklasse angehört und die dieser Geräteklasse zugeordnete Codefolge verwendet. Beispielsweise können folgende Geräteklassen definiert werden: (1) Beleuchtung, (2) Herde und Backofen, (3) Kühl- und Gefriergeräte, (4) Fernseher, (5) Waschmaschinen, (6) Geschirrspüler, (7) Heizungen, (8) Spezielle Kommunikationsvorrichtungen, insbesondere zur Anwesenheitserfassung, (9) Sonstige (beispielsweise HiFi, Computer, Telefon, Fax etc.). Mit dem erfindungsgemäßen System können die erfassten Ströme bzw. Verbräuche den betreffenden Geräteklassen eindeutig zugeordnet werden.

Die Erfindung wird nachfolgend anhand mehrerer Ausführungsbeispiele näher erläutert. Es zeigen:
- Fig. 1: ein System mit einem elektrischen Haushaltsgerät und einer Vorrichtung zum Empfangen von Daten von dem elektrischen Haushaltsgerät,
- Fig. 2: ein elektrisches Haushaltsgerät zur Erfassung der Anwesenheit einer Person,
- Fig. 3: einen Elektrizitätszähler, der dazu eingerichtet ist, in einem *Direct Sequence* CDMA-Verfahren Daten von einem elektrischen Haushaltsgerät zu empfangen,
- Fig. 4: den Verlauf der elektrischen Leistung eines Haushaltsgeräts bei der Aussendung von Daten in einem *Direct Sequence* CDMA-Verfahren,
- Fig. 5: Diagramme zur Codierung eines Nutzsignals mit einer Codefolge,
- Fig. 6: ein elektrisches Haushaltsgerät mit einem Steckernetzteil.

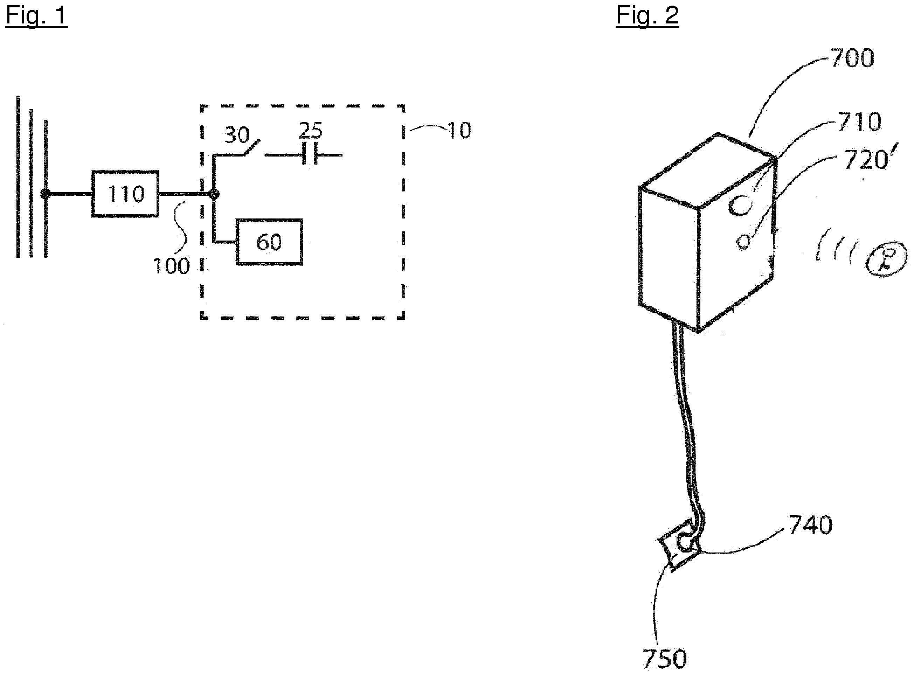

Figur 1 zeigt als Beispiel eines elektrischen Haushaltsgeräts einen Fernseher 10, der über eine Einrichtung zum Empfangen von Daten in Form eines Elektrizitätszählers 110 an ein in der Figur 1 links durch drei parallele Striche veranschaulichtes Versorgungsnetz angeschlossen ist. Die mit 100 bezeichnete Verbindung zwischen dem Fernsehgerät 10 und dem Elektrizitätszähler 110 umfasst ein Netzkabel mit einem Netzstecker und Teile der elektrischen Hausinstallation.

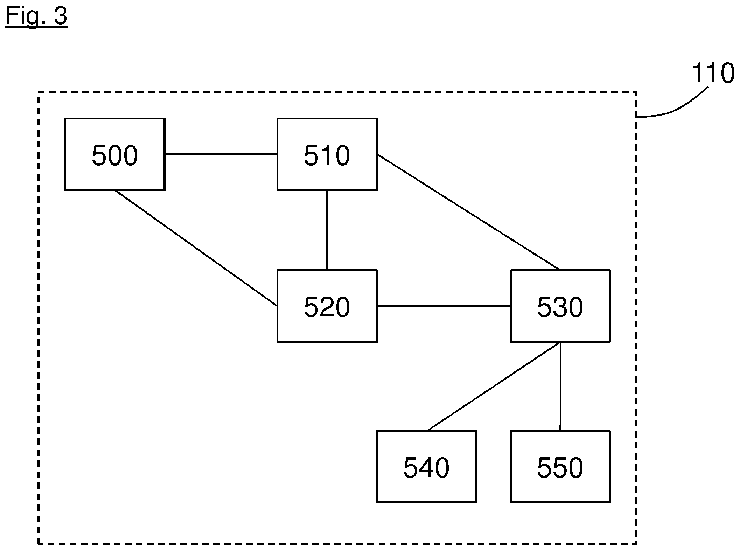

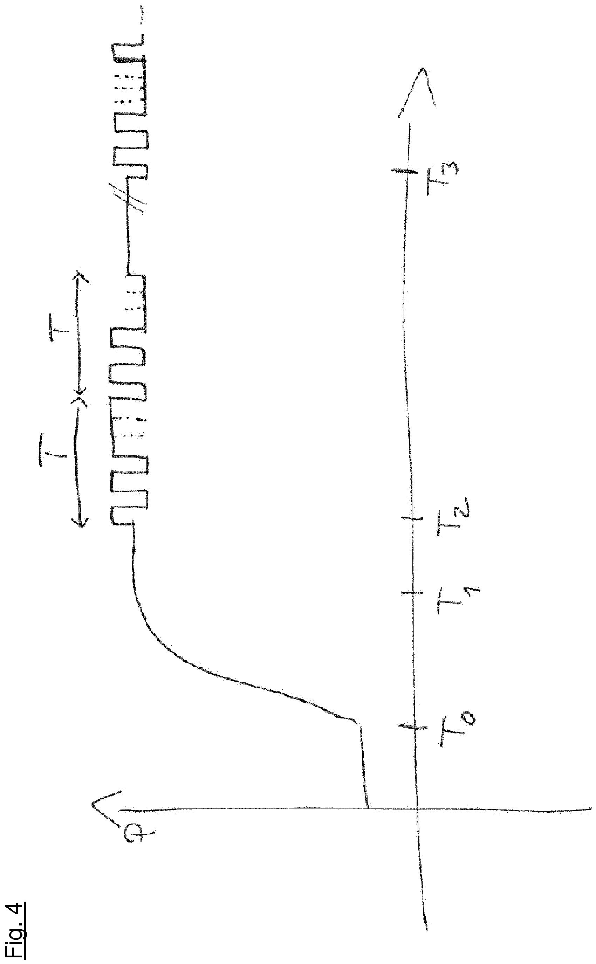

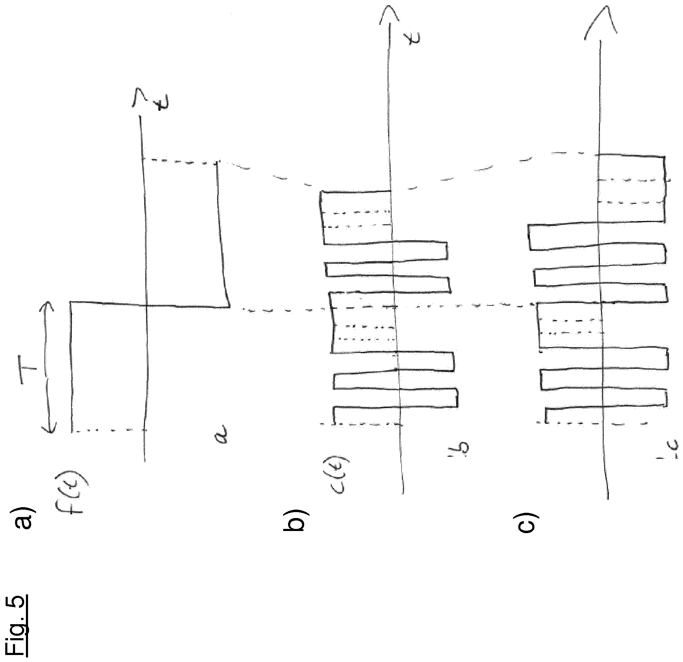

Der Fernseher 10 hat eine Datenübertragungseinrichtung mit einer Steuerung 60, einer Schalteinrichtung 30 und einem Blindverbraucher in Form eines Kondensators 25. Die Steuerung 60 ist dazu eingerichtet, ein Nutzsignal in einem *Direct Sequence* CDMA-Verfahren mit einer vorgegebenen Codefolge zu codieren und die elektrische Leistung des Fernsehgeräts 10 mit dem codierten Signal zu modulieren. Hierzu steuert sie die Schalteinrichtung 30 an und schaltet den Kondensator 25 gemäß dem codierten Signal ein und aus (mit Ein- und Ausschalten ist gemeint, dass eine elektrische Verbindung zum Kondensator 25 hergestellt bzw. getrennt wird), was zu einer Schwankung der mit dem elektrischen Versorgungsnetz ausgetauschten Blindleistung führt. Der Kondensator 25 dient in diesem Ausführungsbeispiel ausschließlich zur Datenaussendung und wird für den normalen Betrieb des Fernsehers 10 nicht benötigt. Die Schalteinrichtung 30 weist ein geeignetes Halbleiterbauelement auf. In diesem Ausführungsbeispiel wird für die Datenübertragung keine Wirkleistung übertragen. Einzelheiten des Elektrizitätszählers 100 werden weiter unten mit Bezug auf Figur 3 erläutert. Einzelheiten zum Nutzsignal und zu dessen Codierung werden mit Bezug auf die Figuren 4 und 5 näher erläutert.

Figur 2 zeigt ein elektrisches Haushaltsgerät 700 zur Installation im Haushalt einer hilfsbedürftigen Person. Das Haushaltsgerät 700 kann in der Nähe einer Eingangstür montiert und mit einem Stecker 740 in eine Steckdose 750 gesteckt werden, um das Haushaltsgerät 700 mit einer Vorrichtung zum Empfangen von Daten elektrisch zu verbinden. Das Haushaltsgerät 700 weist eine Funkschnittstelle 720' auf, die dazu vorgesehen ist, als funkbetriebenes Schloss zu arbeiten. Sobald ein Betreuer, beispielsweise ein Angehöriger, den Haushalt betritt, nähert er einen funkbetriebenen Schlüssel an die Funkschnittstelle 720' an. Daraufhin empfängt die Funkschnittstelle 720' ein codiertes Signal von dem Schlüssel, was das Haushaltsgerät 700 mit einer Kontrollleuchte 710 quittiert.

Gleichzeitig sendet das Haushaltsgerät 700 ein Nutzsignal an eine Vorrichtung zum Empfangen von Daten. Dies kann einmalig oder wiederholt geschehen, zum Beispiel in regelmäßigen Abständen, insbesondere bis der Betreuer den Schlüssel ein weiteres Mal an die Funkschnittstelle 720' annähert und das Haushaltsgerät 700 in einen Ausgangszustand zurückversetzt und den Haushalt verlässt. Das Haushaltsgerät 700 erzeugt ein Nutzsignal, das ein Anwesenheitsbit enthält. Das Anwesenheitsbit ist gesetzt, wenn der Betreuer sich zuvor durch Annähern des Schlüssels an die Funkschnittstelle 720' angemeldet hat. Es ist nicht gesetzt, wenn sich der Betreuer in gleicher Weise wieder abgemeldet hat. Statt eines einzelnen Anwesenheitsbits können in dem Nutzsignal mehrere Anwesenheitsbits enthalten sein, sodass nicht nur ein bestimmter Schlüssel, sondern mehrere, unterschiedlichen Personen zugeordnete Schlüssel in dem Nutzsignal abgebildet werden können. Dadurch ist in dem Nutzsignal die Information über die Anwesenheit mehrerer Personen enthalten und wird an eine Vorrichtung zum Empfangen von Daten übertragen.

In einer alternativen Ausführung, die nicht in einer Figur dargestellt ist, ist das Haushaltsgerät 700 in einen WLAN-Router integriert. Sobald ein Angehöriger den Haushalt betritt und sich ein von ihm mitgeführtes Gerät, beispielsweise ein Mobiltelefon, in dem W-LAN-Router einbucht, sendet das Haushaltsgerät 700 so lange ein Nutzsignal mit einer Information über die Anwesenheit der dem Gerät zugeordneten Person an eine Vorrichtung zum Empfangen von Daten, bis sich das Gerät wieder ausbucht und der Angehörige den Haushalt mutmaßlich wieder verlassen hat. In einer Abwandlung erfordert die Erfassung der Anwesenheit einer Person bzw. eines von der Person mitgeführten Geräts kein Einbuchen in das WLAN-Netzwerk, sondern erfolgt anhand einer dem mitgeführten Gerät zugeordneten Kennung, insbesondere einer MAC-Adresse oder eines Gerätenamens.

Figur 3 zeigt als Beispiel einer Einrichtung zum Empfangen von Daten einen Elektrizitätszähler 110 mit einem Messwerk 500, einer Empfangseinrichtung 510, einem Analysator 520, einem Klassifikator 530, einer Alarmierungseinheit 540 und einer Anzeigeeinheit 550. Empfangseinheit 510, Analysator 520 und Klassifikator 530 stellen Funktionsblöcke einer Steuerung des Elektrizitätszählers dar. Sie erfordern keine zusätzlichen Bauelemente, sondern sind in einen bereits für die Grundfunktion des Elektrizitätszählers benötigten Microcontroller integriert. Das Messwerk 500 ist dazu ausgebildet, mit einer hohen Abtastrate von beispielsweise mindestens 1.000 Samples pro Sekunde Messwerte für Strom, Spannung und Leistung zu bilden. Diese Messwerte werden an die Empfangseinheit 510 übertragen, die dazu ausgebildet ist, mit verschiedenen Codefolgen, auch bezeichnet als Spreizcodes, nach den Aussendungen von Haushaltsgeräten zu suchen, die mit der jeweiligen Codefolge senden. Der Elektrizitätszähler 500 ist also dazu eingerichtet, elektrische Haushaltsgeräte zu erkennen, die gemäß einem *Direct Sequence* CDMA-Verfahren jeweils mit einer dazu vorgesehenen Codefolge senden, und die gesendeten Daten zu empfangen. Dabei wird ein asynchrones *Direct Sequence* CDMA-Verfahren verwendet, das ohne jegliche Synchronisierung zwischen mehreren Sendern und zwischen Sender und Empfänger auskommt.

Die Messwerte vom Messwerk 500 werden an den Analysator 520 übertragen. Außerdem werden Empfangsergebnisse der Empfangseinheit 510 an den Analysator 520 übertragen. Der Analysator 520 nutzt die Ergebnisse der Empfangseinheit 510, um die Verbräuche von denjenigen Haushaltsgeräten aus den insgesamt erfassten Verbräuchen herauszurechnen, deren Aussendungen von der Empfangseinheit 510 erkannt wurden. Der Analysator 520 ist dazu ausgebildet, die nicht von der Empfangseinheit 510 zugeordneten Verbräuche zu verarbeiten. Er befasst sich also insbesondere mit den Spuren von Haushaltsgeräten, die keine erfindungsgemäße Datenübertragungseinrichtung aufweisen. Hierfür geeignete Vorgehensweisen sind beispielsweise aus den folgenden Druckschriften bekannt: EP 2 409 167 A2, EP 2 460 025 A2, EP 2 601 482 A1, EP 2 913 786 A1, EP 2 921 867 A1.

Die Ergebnisse der Empfangseinheit 510 und die Ergebnisse des Analysators 520 werden vom Klassifikator 530 aufbereitet. Er klassifiziert Verbrauchsdaten mit dem Ziel, Handlungsempfehlungen für die Bewohner zu generieren. Beispielsweise kann eine Klassifizierung wie folgt aussehen: "*Im laufenden Monat entfallen 80 % des Verbrauchs auf elektrische Heizung, 8 % auf Herd und Backofen, 2 % auf Beleuchtung."* Eine daraus abgeleitete Handlungsempfehlung könnte sein, einerseits die elektrische Heizung zu ersetzen und andererseits weniger Aufwand zu betreiben, um die Beleuchtungseinrichtung zu optimieren.

Entsprechende Ergebnisse werden an die Anzeigeeinheit 550 übertragen und dort zur Anzeige gebracht. Diese Ergebnisse können zusätzlich oder alternativ über eine Weitverkehrsschnittstelle, also über eine Kommunikationseinrichtung, an eine zentrale Serviceeinrichtung übertragen werden, die den Stromkunden auf einer Webseite eine übersichtlich klassifizierte Darstellung ihrer Verbräuche anbietet.

Der Klassifikator 530 klassifiziert optional zusätzlich die Verbrauchsdaten mit dem Ziel, den Gesundheitszustand der Bewohner abzuleiten. Diese Option ist besonders von Bedeutung bei einem einzelnen, allein lebenden Bewohner und insbesondere wenn dieser pflegebedürftig ist. Hierfür geeignete Vorgehensweisen sind beispielsweise aus den folgenden Druckschriften bekannt DE 10 2007 058 511 B4, EP 2 840 532 A1, EP 1 705 617 A3.

Sofern der Klassifikator 530 auf einen gefährdeten Gesundheitszustand des Bewohners schließt, wird ein Alarm an die Alarmierungseinheit 540 übertragen und von dieser über eine Weitverkehrsschnittstelle (nicht gezeigt), an eine zu alarmierende Instanz, also an eine bestimmte Einrichtung oder an eine bestimmte Person, weitergeleitet.

Figur 4 zeigt den Verlauf der elektrischen Leistung eines Haushaltsgeräts bei einer Aussendung von Daten in einem *Direct Sequence* CDMA-Verfahren. Das Haushaltsgerät wird zum Zeitpunkt T₀ eingeschaltet. Eine Vielzahl interner Verbraucher des Haushaltsgeräts werden aktiviert, was zu einem rampenartigen Anstieg der elektrischen Leistung P führt. Zum Zeitpunkt T₁ ist die Anstiegsrampe beendet. Zu einem nachfolgenden Zeitpunkt T₂ wird ein interner Verbraucher des Haushaltsgeräts entsprechend einem codierten Signal ein- und ausgeschaltet. Auf diese Weise wird die elektrische Leistung P des Haushaltsgeräts moduliert. Zu einem späteren Zeitpunkt T₃ erfolgt eine weitere Modulation der elektrischen Leistung P mit einem anderen, codierten Signal.

Eine Besonderheit besteht darin, dass die erste Datenaussendung in einem vorgegebenen zeitlichen Abstand ΔT = T₂ - T₀ zu der bei T₀ beginnenden Anschaltflanke steht und dass dieser Umstand in dem ersten codierten Signal codiert ist. Eine mit dem elektrischen Haushaltsgerät verbundene Einrichtung zum Empfangen von Daten kann an einem Einschaltbit der ersten Datenaussendung erkennen, dass zu einem entsprechend dem vorgegebenen zeitlichen Abstand ΔT früheren Zeitpunkt vor der Datenaussendung ein Anstieg der elektrischen Leistung zu erwarten ist und dass eine typische Leistungsaufnahme des Haushaltsgeräts aus diesem Anstieg ermittelt werden kann. Die zweite Datenaussendung zum Zeitpunkt T₃ steht in keinem definierten zeitlichen Bezug zu einer Einschaltflanke, deshalb ist dort das Einschaltbit nicht gesetzt.

Diese Ausführung ist besonders sinnvoll für Haushaltsgeräte oder Klassen von Haushaltsgeräten, bei denen nur ein Teil der internen Verbraucher für die Modulation der elektrischen Leistung ein- und ausgeschaltet werden kann oder soll. Der vorgegebene zeitliche Abstand ΔT zwischen den Zeitpunkten T₂ und T₀ kann für die jeweilige Geräteklasse fest vereinbart sein. Es ist aber auch möglich, diesen vorgegebenen zeitlichen Abstand lediglich für ein individuelles Gerät konstant zu halten und es der Vorrichtung zum Empfangen von Daten zu überlassen, diesen vorgegebenen zeitlichen Abstand zu erlernen. Ein solcher Lernvorgang setzt lediglich voraus, dass ein Haushaltsgerät mit einer gewissen Wahrscheinlichkeit dann angeschaltet wird, wenn keine weiteren Verbraucher störende Signale erzeugen.

Figur 5 zeigt in drei übereinander angeordneten Diagrammen a), b) und c) den zeitlichen Verlauf eines Nutzsignals f(t), einer Codefolge c(t) und eines codierten Signals. Teil a) der Figur 5 zeigt das Nutzsignal f(t), das aus zwei Bits mit einer Länge T, die auch als Bittakt bezeichnet wird, aufweist. Das erste Bit ist gesetzt, entsprechend einem positiven Niveau des Signals, das zweite Bit ist nicht gesetzt, entsprechend einem negativen Niveau des Signals. Das erste Bit des Nutzsignal f(t) aus Figur 5 a) ist ein (gesetztes) Einschaltbit und das zweite Bit des Nutzsignals f(t) ist ein (nicht gesetztes) Aktivitätsbit.

Teil b) der Figur 5 zeigt als Beispiel eine Codefolge c(t), die sieben Chips mit Chipintervallen T_{c} = T/7 aufweist. Auf jedes Bit des Nutzsignals f(t) wird die Codefolge c(t) einmal angewendet, weshalb Teil b) der Figur 5 die Codefolge c(t) mit sieben Chipintervallen zwei Mal nacheinander zeigt. Die dargestellte, bipolare Codefolge c(t) kann als S_{6bd}(n) ={+- + - +++} dargestellt werden.

Teil c) der Figur 5 zeigt das codierte Signal, das durch Multiplikation des Nutzsignals f(t) mit den Codefolgen c(t) gebildet worden ist. Man erkennt, dass die Codefolge c(t) aus Figur 5b) für das erste, gesetzte Aktivitätsbit übernommen und für das zweite, nicht gesetzte Aktivitätsbit invertiert wurde. Reziprok zur Verkürzung der Chipdauer T_{C} erhöht sich der Bandbreitebedarf der Übertragung um einen Faktor βCDMA = 7.

Bei dem erfindungsgemäß verwendeten *Direct Sequence* CDMA-Verfahren wird die elektrische Leistung des Haushaltsgeräts mit diesem codierten Signal moduliert.

Das Verfahren gemäß Figur 5 kommt ohne Synchronisierung aus, das heißt mehrere elektrische Haushaltsgerät können unkoordiniert Daten an eine Vorrichtung zum Empfangen von Daten übertragen, an die sie parallel angeschlossen sind. Eine Synchronisierung zwischen dem oder den Haushaltsgeräten und der Vorrichtung zum Empfangen von Daten ist ebenfalls nicht erforderlich.

Nachfolgend werden beispielhaft neun Folgen einer Goldfamilie mit jeweils sieben Chipintervallen veranschaulicht. Jede Folge entspricht einer erfindungsgemäßen Codefolge und ist einer ebenfalls unten angegebenen Geräteklasse zugeordnet:

| | |
|---|---|
| S_{1bd}(n)= { - - - + - + + } | Licht |
| S_{2bd}(n)= { - + + - + - - } | Herd und Backofen |
| S_{3bd}(n)= { + - - - - - - } | Kühlen und Gefrieren |
| S_{4bd}(n)= { - - + + + - - } | Fernseher |
| S_{5bd}(n)= { - + - - + - + } | Waschmaschine |
| S_{6bd}(n)= { + - + - + + + } | Geschirrwäscher |
| S_{7bd}(n)= { - + + - - + - } | Heizen |
| S_{8bd}(n)= { + + + + - - + } | besondere Kommunikationsvorrichtungen |
| S_{9bd}(n)= { + + - + + + - } | Sonstige (Hifi, Computer, Telefon, Fax etc.) |

Bei einer Datenübertragung nach dem erfindungsgemäßen Verfahren senden die Haushaltsgeräte in der Regel nur jeweils wenige Bit. In den Figuren 4 und 5 werden beispielhaft jeweils genau zwei Bit übertragen, nämlich erstens ein Einschaltbit und zweitens ein Aktivitätsbit. Wie bereits erläutert, ist dabei vorgesehen, dass die Haushaltsgeräte bei Erfassung eines Einschaltvorgangs mit gesetztem Einschaltbit und bei einer Interaktion eines Benutzers mit gesetztem Aktivitätsbit senden. Wird ein Gerät durch die Interaktion eines Benutzers eingeschaltet, werden Einschaltbit und Aktivitätsbit zugleich gesetzt. Schaltet sich dagegen beispielsweise das Aggregat eines Kühlschranks thermostatgesteuert oder schaltet sich ein Töpferofen zeitgesteuert ein, wird nur das Einschaltbit gesetzt. Ist ein Haushaltsgerät über längere Zeit hinweg ohne Benutzerinteraktion eingeschaltet, kann es periodisch gegebenenfalls mit einem gewissen zufälligen Anteil, Aussendungen vornehmen. Das Haushaltsgerät ist dann im Wesentlichen frei, Sendezeitpunkte zu bestimmen.

Bei dieser Ausführung wird erreicht, dass viele in einem gemeinsamen Stromkreis angeordnete, elektrische Haushaltsgeräte Informationen an eine zentrale Vorrichtung zum Empfangen von Daten senden können, ohne dass irgendeine Synchronisation der Geräte erforderlich ist.

Nachfolgend werden weitere Beispiele für Informationen genannt, die in dem Nutzsignal enthalten sein können:
- Konfigurationsbedarf (z.B. fehlende Einstellung einer Wasserhärte bei einer Geschirrspülmaschine)
- Auffüllbedarf (Bestückung mit Verbrauchsmaterial wie Papier, Geschirrspülmittel etc.)
- Wartungsbedarf
- Gefahr (z.B. festgestellte Undichtigkeit einer Waschmaschine)
- Ausschaltbit
- Togglebit (ist abwechselnd gesetzt bzw. nicht gesetzt).

Beispielsweise kann eine letzte Datenaussendung in einem definierten zeitlichen Bezug zu einer Ausschaltflanke stehen und dieser Umstand kann in der letzten Datenaussendung codiert sein. Eine Vorrichtung zum Empfangen von Daten kann an dem Ausschaltbit erkennen, dass nachfolgend ein Absinken der elektrischen Leistung zu erwarten ist und dass eine typische, von dem elektrischen Haushaltsgerät aufgenommene Leistung aus diesem Absinken ermittelt werden kann. Natürlich kann ein solches Ausschaltbit nur genutzt werden bei einem Haushaltsgerät, das sich oder einen wesentlichen Verbraucher selbsttätig ausschaltet oder von einem Anwender durch einen elektronischen Ausschalter ausgeschaltet wird. Ein Haushaltsgerät, das durch Ziehen eines Netzsteckers ausgeschaltet wird, kann sich nicht mit Hilfe eines Ausschaltbits abmelden.

Wird eine niedrige Chiprate von beispielsweise 0,1 Chip pro Sekunde - entsprechend einer Chipdauer von T_{C} = 10 s - gewählt, dann funktioniert der Empfang auch mit einer Messeinrichtung, die eine niedrige Bandbreite aufweist, beispielsweise mit einem Elektrizitätszähler mit einem einfachen Messwerk auf Basis des Messchips ADE7755. In diesem Fall kann beispielsweise ein Bit pro 70 Sekunden übertragen werden. Die Aussendung von 2 Bit erfordert dementsprechend 140 Sekunden. Diese niedrige Übertragungsrate ist bei bestimmten Anwendungen vertretbar, da eine gleichzeitige oder quasi gleichzeitige Aussendung mehrerer Haushaltsgeräte unterschiedlicher Geräteklassen empfangsseitig ohne Datenverlust verarbeitet werden kann.

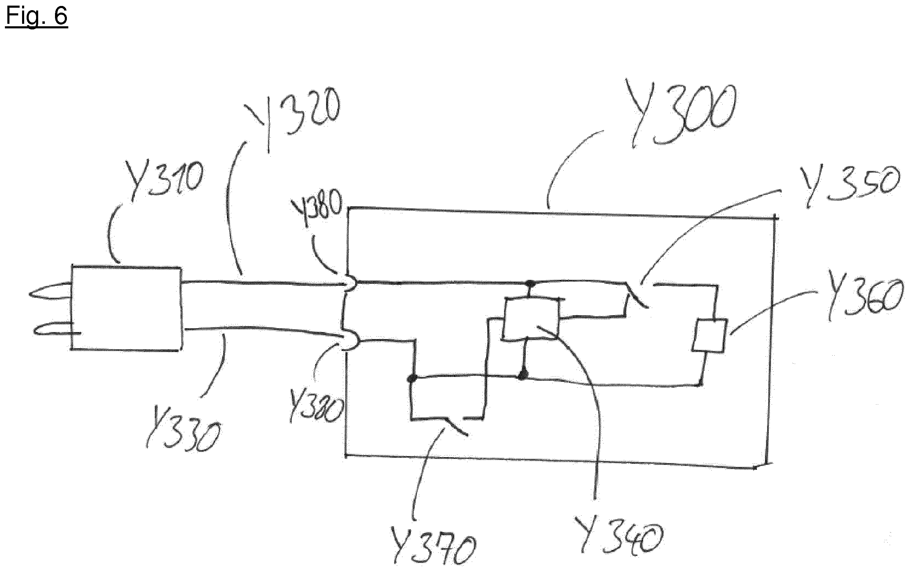

Figur 6 zeigt ein elektrisches Haushaltsgerät Y300, das über ein Steckernetzteil Y310 an eine nicht dargestellte elektrische Versorgungsleitung angeschlossen ist. Das Haushaltsgerät Y300 hat eine Steuerung Y340, ein Schaltelement Y350, eine Last Y360 und ein Eingabeelement Y370. Das Haushaltsgerät Y300 ist über eine Niederspannungssteckverbindung Y380 an zum Steckernetzteil Y310 führende elektrische Leitungen Y320 und Y330 angeschlossen.

Die Steuerung Y340 ist dazu eingerichtet, die Last Y360 mit Hilfe des Schaltelements Y360 ein- und auszuschalten, sodass ein Leistungsfluss durch die Versorgungsleitungen Y320 und Y330 moduliert wird. Das Steckernetzteil Y310 weist einen üblichen Zusammenhang zwischen aufgenommener und abgegebener Leistung auf. Bei steigender abgegebener Leistung kommt es also zu einem Anstieg der aufgenommenen Leistung. Die durch die Steuerung Y340 vorgenommene Modulation der vom Steckernetzteil Y310 abgegebenen Leistung bewirkt demnach eine Modulation der vom Steckernetzteil Y310 aufgenommenen Leistung, ohne dass hierzu besondere Maßnahmen im Steckernetzteil Y310 erforderlich wären. Das Steckernetzteil kann beispielsweise ein Transformatornetzteil oder ein Schaltnetzteil sein. Lediglich die Zeitkonstanten im Steckernetzteil Y310 müssen hinreichend klein gegenüber der Chipdauer sein, sodass die Modulation der vom Steckernetzteil Y310 abgegebenen Leistung nicht aus internen Energiespeichern des Steckernetzteils Y310 überbrückt wird.

Das Ausführungsbeispiel der Figur 6 verdeutlicht, dass eine Datenübertragung ohne Bezug zu Nulldurchgängen der elektrischen Versorgungsspannung und ohne Bezug zur Netzfrequenz besonders vorteilhaft und sogar bei Geräten möglich ist, die eine von einer Gleichspannung gespeiste Steuerung aufweisen. Die Modulation der elektrischen Leistung erfolgt über von einem Anwender gefahrlos berührbare Schnittstellen wie beispielsweise USB-Schnittstellen, Kopfhörerbuchsen, usw. Wie üblich, kann bei dem Steckernetzteil Y310 eine doppelte Isolierung vorgesehen sein, die die berührbaren Schnittstellen sicher von der gefährlichen Netzspannung trennt. Die Steuerung befindet sich üblicherweise hinter dieser Trennung.

## Patentansprüche

1. Elektrisches Haushaltsgerät mit einer Datenübertragungseinrichtung, die eine Steuerung (60) zum Modulieren einer elektrischen Leistung des Haushaltsgeräts aufweist, wobei die Steuerung (60) dazu eingerichtet ist, ein Nutzsignal (f(t)) in einem *Direct Sequence* CDMA-Verfahren mit einer vorgegebenen Codefolge (c(t)) zu codieren und die elektrische Leistung mit dem codierten Signal zu modulieren, **dadurch gekennzeichnet, dass** die Steuerung (60) dazu ausgebildet ist, einen Einschaltvorgang eines elektrischen Verbrauchers des elektrischen Haushaltsgeräts zu erfassen und ein Nutzsignal (f(t)) auszusenden, das eine Information über den Einschaltvorgang enthält, wobei die Steuerung (60) dazu ausgebildet ist, das Nutzsignal (f(t)) mit der Information über den Einschaltvorgang in einem vorgegebenen zeitlichen Abstand nach dem Einschaltvorgang auszusenden.

2. Elektrisches Haushaltsgerät nach Anspruch 1, **dadurch gekennzeichnet, dass** das *Direct Sequence* CDMA-Verfahren ein asynchrones *Direct Sequence* CDMA-Verfahren ist.

3. Elektrisches Haushaltsgerät nach Anspruch 1 oder 2, **dadurch gekennzeichnet, dass** die Codefolge (c(t)) eine Gold-Folge ist.

4. Elektrisches Haushaltsgerät nach einem der Ansprüche 1 bis 3, **dadurch gekennzeichnet, dass** das elektrische Haushaltsgerät zum Anschließen an ein elektrisches Versorgungsnetz bestimmt ist, das eine vorgegebene Netzfrequenz aufweist, wobei die Länge der Chip-Intervalle (T_{C}) der Codefolge (c(t)) einer Periodendauer der Netzfrequenz entspricht oder einem ganzzahligen Vielfachen davon.

5. Elektrisches Haushaltsgerät nach Anspruch 4, **dadurch gekennzeichnet, dass** die Länge der Chip-Intervalle 100 ms oder ein ganzzahliges Vielfaches davon beträgt.

6. Elektrisches Haushaltsgerät nach einem der Ansprüche 1 bis 5, **dadurch gekennzeichnet, dass** das elektrische Haushaltsgerät eine Hauptfunktion aufweist und einen elektrischen Verbraucher, der zum Bereitstellen der Hauptfunktion mit elektrischer Leistung zu versorgen ist, wobei die Steuerung die elektrische Leistung des elektrischen Verbrauchers so moduliert, dass die Hauptfunktion im Wesentlichen ohne Beeinträchtigung bereitgestellt wird.

7. Elektrisches Haushaltsgerät nach einem der Ansprüche 1 bis 6, **dadurch gekennzeichnet, dass** das elektrische Haushaltsgerät einen Blindverbraucher aufweist und die Steuerung (60) dazu ausgebildet ist, den Blindverbraucher zu- und abzuschalten, so dass die Modulation der elektrischen Leistung in einer Modulation der elektrischen Blindleistung des Haushaltsgeräts besteht.

8. Elektrisches Haushaltsgerät nach einem der Ansprüche 1 bis 7, **dadurch gekennzeichnet, dass** die Steuerung (60) dazu ausgebildet ist, eine Interaktion eines Benutzers mit dem elektrischen Haushaltsgerät zu erfassen und ein Nutzsignal (f(t)) auszusenden, das eine Information über die Benutzerinteraktion enthält.

9. Elektrisches Haushaltsgerät (700) nach einem der Ansprüche 1 bis 8, **dadurch gekennzeichnet, dass** das elektrische Haushaltsgerät (700) Mittel zur Erfassung der Anwesenheit einer Person aufweist und die Steuerung (60) dazu ausgebildet ist, ein Nutzsignal (f(t)) auszusenden, das eine Information über die Anwesenheit enthält.

10. Elektrisches Haushaltsgerät (Y300) nach einem der Ansprüche 1 bis 9, **dadurch gekennzeichnet, dass** das elektrische Haushaltsgerät (Y300) ein Netzteil (Y310) aufweist, wobei die Steuerung (Y340) am Ausgang des Netzteils (Y310) angeordnet und dazu ausgebildet ist, die elektrische Leistung eines mit dem Ausgang des Netzteils (Y310) verbundenen elektrischen Verbrauchers zu modulieren.

11. Vorrichtung zum Empfang von Daten von einem elektrischen Haushaltsgerät nach einem der Ansprüche 1 bis 10, wobei die Vorrichtung eine Messeinrichtung, die dazu ausgebildet ist, einen elektrischen Strom des elektrischen Verbrauchers zu messen, und eine Empfangseinrichtung aufweist, die dazu ausgebildet ist, den von der Messeinrichtung gemessenen elektrischen Strom in einem *Direct Sequence* CDMA-Verfahren mit einer vorgegebenen Codefolge (c(t)) zu demodulieren und das von dem elektrischen Haushaltsgerät übertragene Nutzsignal zu decodieren und zur weiteren Auswertung zur Verfügung zu stellen, **dadurch gekennzeichnet, dass** die Vorrichtung in einen Elektrizitätszähler (110) integriert ist, wobei die Messeinrichtung Teil eines Messwerks (500) des Elektrizitätszählers (110) ist.

12. Vorrichtung zum Empfang von Daten nach Anspruch 11, **dadurch gekennzeichnet, dass** die Vorrichtung eine Kommunikationseinrichtung zum Übertragen von empfangenen Nutzsignalen (f(t)) aufweist.

13. System mit einer Vielzahl von elektrischen Haushaltsgeräten nach einem der Ansprüche 1 bis 10 und einer Vorrichtung zum Empfang von Daten nach Anspruch 11 oder 12, **dadurch gekennzeichnet, dass** in der Empfangseinrichtung der Vorrichtung zum Empfang von Daten eine Vielzahl unterschiedlicher Codefolgen (c(t)) hinterlegt sind, die jeweils einer Geräteklasse zugeordnet sind, und dass jedes der elektrischen Haushaltsgeräte einer definierten Geräteklasse angehört und die dieser Geräteklasse zugeordnete Codefolge (c(t)) verwendet.

14. System nach Anspruch 13, **dadurch gekennzeichnet, dass** die Geräteklassen eine oder mehrere der folgenden Geräteklassen umfassen: Beleuchtung; Herde und Backofen; Kühl- und Gefriergeräte; Fernseher; Waschmaschinen; Geschirrspüler; Heizungen.

## Claims

1. Electrical household appliance with a data transmission device, which comprises a controller (60) for modulating an electrical power of the domestic appliance, wherein the controller (60) is arranged to encode a wanted signal (f(t)) in a *Direct Sequence* CDMA method with a predetermined code sequence (c(t)) and to modulate the electrical power with the encoded signal, **characterized in that** the controller (60) is configured to detect a switch-on process of an electrical consumer of the electrical household appliance and to transmit a wanted signal (f(t)) which contains information about the switch-on process, the controller (60) being configured to transmit the wanted signal (f(t)) with the information about the switch-on process at a predetermined time interval after the switch-on process.

2. Electrical household appliance according to claim 1, **characterized in that** the *Direct Sequence* CDMA method is an asynchronous *Direct Sequence* CDMA method.

3. Electrical household appliance according to claim 1 or 2, **characterized in that**, that the code sequence (c(t)) is a gold code.

4. Electrical household appliance according to one of claims 1 to 3, **characterized in that** the electrical household appliance is intended for connection to an electrical supply network which has a predetermined network frequency, the length of the chip intervals (TC) of the code sequence (c(t)) corresponding to a period duration of the network frequency or an integer multiple thereof.

5. Electrical household appliance according to claim 4, **characterized in that** the length of the chip intervals is 100 ms or an integer multiple thereof.

6. Electrical household appliance according to one of claims 1 to 5, **characterized in that** the electrical household appliance has a main function and an electrical consumer to be supplied with electrical power for providing the main function, wherein the control modulates the electrical power of the electrical consumer in such a way that the main function is provided substantially without impairment.

7. Electrical household appliance according to one of claims 1 to 6, **characterized in that** the electrical household appliance comprises a reactive load and the control (60) is designed to switch the reactive load on and off so that the modulation of the electrical power consists in a modulation of the electrical reactive power of the household appliance.

8. Electrical household appliance according to one of claims 1 to 7, **characterized in that** the control (60) is designed to detect an interaction of a user with the electrical household appliance and to emit a useful signal (f(t)) containing information about the user interaction.

9. Electrical household appliance (700) according to one of claims 1 to 8, **characterized in that** the electrical household appliance (700) has means for detecting the presence of a person and the control (60) is designed to emit a useful signal (f(t)) containing information about said presence.

10. Electrical household appliance (Y300) according to one of claims 1 to 9, **characterized in that** the electrical household appliance (Y300) comprises a power supply unit (Y310), wherein the control (Y340) is arranged at the output of the power supply unit (Y310) and is designed to modulate the electrical power of an electrical consumer connected to the output of the power supply unit (Y310).

11. Device for receiving data from an electrical household appliance according to one of claims 1 to 10, said device comprising measuring means adapted to measure an electrical current of the electrical consumer and receiving means adapted to receive said data, to demodulate the electric current measured by the measuring device in a *Direct Sequence* CDMA method with a predetermined code sequence (c(t)) and to decode the wanted signal transmitted by the household electrical appliance and make it available for further evaluation, **characterized in that** the device is integrated in an electricity meter (110), the measuring device being part of a measuring mechanism (500) of the electricity meter (110).

12. Device for receiving data according to claim 11, **characterized in that** the device has a communication device for transmitting received wanted signals (f(t)).

13. System with a plurality of electrical household appliances according to one of claims 1 to 10 and a device for receiving data according to claim 11 or 12, **characterized in that** a plurality of different code sequences (c(t)) are stored in the receiving device of the device for receiving data, each code sequence being assigned to one appliance class, and that each of the electrical household appliances belongs to a defined appliance class and uses the code sequence (c(t)) assigned to this appliance class.

14. System according to claim 13, **characterized in that** the appliance classes comprise one or more of the following appliance classes: lighting; stoves and ovens; refrigerators and freezers; television sets; washing machines; dishwashers; heaters.

## Revendications

1. Appareil ménager électrique comprenant un dispositif de transmission de données, lequel présente une commande (60) destinée à moduler une puissance électrique de l'appareil ménager, dans lequel la commande (60) est configurée pour coder un signal utile (f(t)) avec une séquence de code (c(t)) prédéfinie dans un procédé CDMA à séquence directe et pour moduler la puissance électrique avec le signal codé, **caractérisé en ce que** la commande (60) est conçue pour détecter une opération de mise en marche du consommateur électrique de l'appareil ménager électrique et pour envoyer un signal utile (f(t)) contenant une information sur l'opération de mise en marche, dans lequel la commande (60) est conçue pour envoyer le signal utile (f(t)) avec l'information sur l'opération de mise en marche dans un intervalle de temps prédéfini après l'opération de mise en marche.

2. Appareil ménager électrique selon la revendication 1, **caractérisé en ce que** le procédé CDMA à séquence directe est un procédé CDMA à séquence directe asynchrone.

3. Appareil ménager électrique selon la revendication 1 ou 2, **caractérisé en ce que** la séquence de code (c(t)) est une séquence de Gold.

4. Appareil ménager électrique selon l'une des revendications 1 à 3, **caractérisé en ce que** l'appareil ménager électrique est destiné à être raccordé à un réseau d'alimentation électrique présentant une fréquence de réseau prédéfinie, dans lequel la longueur des intervalles de puce (Tc) de la séquence de code (c(t)) correspond à une durée de période de la fréquence de réseau ou à un multiple entier de celle-ci.

5. Appareil ménager électrique selon la revendication 4, **caractérisé en ce que** la longueur des intervalles de puce s'élève à 100 ms ou à un multiple entier de ce nombre.

6. Appareil ménager électrique selon l'une des revendications 1 à 5, **caractérisé en ce que** l'appareil ménager électrique présente une fonction principale et un consommateur électrique à alimenter avec une puissance électrique pour fournir la fonction principale, dans lequel la commande module la puissance électrique du consommateur électrique de telle façon que la fonction principale est fournie quasiment sans perturbation.

7. Appareil ménager électrique selon l'une des revendications 1 à 6, **caractérisé en ce que** l'appareil ménager électrique présente un consommateur réactif et la commande (60) est conçue pour mettre en marche et éteindre le consommateur réactif, de telle façon que la modulation de la puissance électrique consiste en une modulation de la puissance électrique réactive de l'appareil ménager.

8. Appareil ménager électrique selon l'une des revendications 1 à 7, **caractérisé en ce que** la commande (60) est conçue pour détecter une interaction d'un utilisateur avec l'appareil ménager électrique et pour envoyer un signal utile (f(t)) contenant une information sur l'interaction d'utilisateur.

9. Appareil ménager électrique (700) selon l'une des revendications 1 à 8, **caractérisé en ce que** l'appareil ménager électrique (700) présente des moyens de détection de la présence d'une personne et la commande (60) est conçue pour envoyer un signal utile (f(t)) contenant une information sur la présence.

10. Appareil ménager électrique (Y300) selon l'une des revendications 1 à 9, **caractérisé en ce que** l'appareil ménager électrique (Y300) présente un bloc d'alimentation (Y310), dans lequel la commande (Y340) est disposée à la sortie du bloc d'alimentation (Y310) et conçue pour moduler la puissance électrique d'un consommateur électrique relié à la sortie du bloc d'alimentation (Y310).

11. Dispositif de réception de données provenant d'un appareil ménager électrique selon l'une des revendications 1 à 10, dans lequel le dispositif présente un système de mesure conçu pour mesurer un courant électrique du consommateur électrique, ainsi qu'un système de réception conçu pour démoduler le courant électrique mesuré par le système de mesure avec une séquence de code (c(t)) prédéfinie dans un procédé CDMA à séquence directe et pour décoder le signal utile transmis par l'appareil ménager électrique et mettre celui-ci à disposition pour une évaluation consécutive, **caractérisé en ce que** le dispositif est intégré dans un compteur d'électricité (110), le système de mesure faisant partie d'un instrument de mesure (500) du compteur d'électricité (110).

12. Dispositif de réception de données selon la revendication 11, **caractérisé en ce que** le dispositif présente un système de communication pour la transmission de signaux utiles (f(t)) reçus.

13. Installation comprenant une pluralité d'appareils ménagers électriques selon l'une des revendications 1 à 10 et un dispositif de réception de données selon la revendication 11 ou 12, **caractérisée en ce qu'**une pluralité de séquences de code (c(t)) différentes sont enregistrées dans le système de réception du dispositif de réception de données, lesquelles sont respectivement attribuées à une classe d'appareil, et **en ce que** chacun des appareils ménagers électriques appartient à une classe d'appareil définie et utilise la séquence de code (c(t)) attribuée à cette classe d'appareil.

14. Installation selon la revendication 13, **caractérisée en ce que** les classes d'appareil comportent l'une ou plusieurs des classes d'appareil suivantes : éclairage ; cuisinières et fours ; réfrigérateurs et congélateurs ; téléviseurs ; machines à laver ; lave-vaisselle ; chauffages.
